# EUROPÄISCHE PATENTSCHRIFT

(11) **EP 2 308 194 B1**
(45) Veröffentlichungstag und Bekanntmachung des Hinweises auf die Patenterteilung: **02.03.2016**
(21) Anmeldenummer: 09777366.7
(22) Anmeldetag: 22.07.2009
(51) Int. Cl.: H04L 9/32, G06F 21/10, H04W 12/02

(54) **PRODUKTSICHERUNGSSYSTEM**
PRODUCT SECURITY SYSTEM
SYSTÈME DE PROTECTION DE PRODUITS

(30) Priorität: 23.07.2008 DE 102008034328
(43) Veröffentlichungstag der Anmeldung: 13.04.2011
(73) Patentinhaber: Giesecke & Devrient GmbH, 81677 München (DE)
(72) Erfinder: FIEDLER, Michael, 81369 München (DE)
(86) Internationale Anmeldenummer: PCT/EP2009/005323
(87) Internationale Veröffentlichungsnummer: WO 2010/009876

(56) Entgegenhaltungen:
- WO-A-2008/022123
- US-A1- 2007 011 728
- US-A1- 2007 106 897
- US-A1- 2007 250 704

## Beschreibung

Die vorliegende Erfindung betrifft ein Produktsicherungssystem, in welchem auf Produkte maschinenlesbare Informationen aufgebracht sind. Zu dem Produkt zugehörige Daten werden zentral in einer Datenbank bereitgestellt.

Maschinenlesbare Informationen können beispielsweise in der Form von RFID-Labels oder Barcodes auf Produkte aufgebracht werden. Es ist bekannt, daß ein Hersteller des Produkts ein Produkt mit einem RFID-Label versieht und mit dem Produkt verknüpfte Daten in der Datenbank eines Dritten bereitstellt. Es kann beispielsweise ein Joghurtbecher mit entsprechendem Verfallsdatum eine Produkt-ID in dem RFID-Label speichern. Zugeordnet zu der Produkt-ID ist das Verfallsdatum in der zentralen Datenbank gespeichert. Der Endkunde kann das RFID-Label mit seinem RFID-fähigen Handy auslesen, die gelesene Produkt-ID an die Datenbank senden und erhält als Antwort eine zuverlässige Angabe über das Verfallsdatum des Produkts.

Es ist ebenfalls bekannt, ein derartiges System zur Bereitstellung sensitiver oder vertraulicher Informationen, die nur bestimmten Adressaten zugänglich sein soll, zu verwenden. Beispielsweise kann in der Datenbank zugeordnet zu der Produkt-ID eine vertrauliche Lieferinformation gespeichert sein, welche nur von berechtigten Instanzen, beispielsweise dem Lieferungsempfänger, aus der Datenbank abgerufen werden dürfen.

WO 2008/022123 A1 zeigt ein Produktsicherungssystem mit einem zentralen Server. Von dem Label eines Produktes ausgelesene Daten werden an den Server gesendet, der mit Hilfe der Daten überprüft, ob das Produkt bestimmte Regeln erfüllt. Sind die Regeln erfüllt, versendet der Server einen positiven Bestätigungscode, welches das Label intern verifizieren kann.

Es ist die Aufgabe der vorliegenden Erfindung, ein System mit einer verbesserten Datensicherheit bereitzustellen.

Diese Aufgabe wird gelöst mit dem Gegenstand der unabhängigen Ansprüche. Die abhängigen Ansprüche sind auf bevorzugte Ausführungsformen gerichtet.

Es ist ein Grundgedanke der vorliegenden Erfindung, einem Datenbankanbieter verschlüsselte Daten bereitzustellen, die er nur mit Hilfe einer Information entschlüsseln kann, welche auf einem dem Datensatz zugeordneten Produkt maschinenlesbar aufgebracht ist. Auf diesem Weg kann der Datenbankanbieter einzelne Datensätze aus der Vielzahl der in der Datenbank gespeicherten Datensätze erst dann entschlüsseln und bereitstellen, wenn er die entsprechende maschinenlesbare Information erhält. Auf die weiteren Inhalte der Datenbank kann der Datenbankanbieter, ohne das Vorliegen der auf den Produkten aufgebrachten maschinenlesbaren Information nicht zugreifen. Da ein Missbrauch der Daten durch den Datenbankanbieter somit eingeschränkt wird, kann diese Dienstleistung eher an einen Dritten vergeben werden.

In einer bevorzugten Ausführungsform ist auf dem Produkt als maschinenlesbare Information ein Entschlüsselungsschlüssel aufgebracht.

In anderen Ausgestaltungen ist auf dem Produkt als maschinenlesbare Information ein Teil des dem Produkt zugeordneten verschlüsselten Datensatz enthalten. Der verschlüsselte Datensatz - optional einschließlich eines Entschlüsselungsschlüssels - wird in geeigneter Weise in einen Hauptteil und einen Rest aufgeteilt, so daß der in der Datenbank gespeicherte Hauptteil ohne den auf dem Produkt aufgebrachten Rest nicht entschlüsselt werden kann.

Die Erfindung wird im Folgenden mit Bezug auf bevorzugte Ausführungsform beschrieben, welche im Einzelnen zeigen:
- Fig. 1: ein Produktinformationssystem mit verschlüsselten Datensätzen einer Datenbank und einem Entschlüsselungsschlüssel auf einem Produkt;
- Fig. 2: ein Produktinformationssystem mit verschlüsselten Teildatesätzen in einer Datenbank und Restdatensätzen auf Produkten.

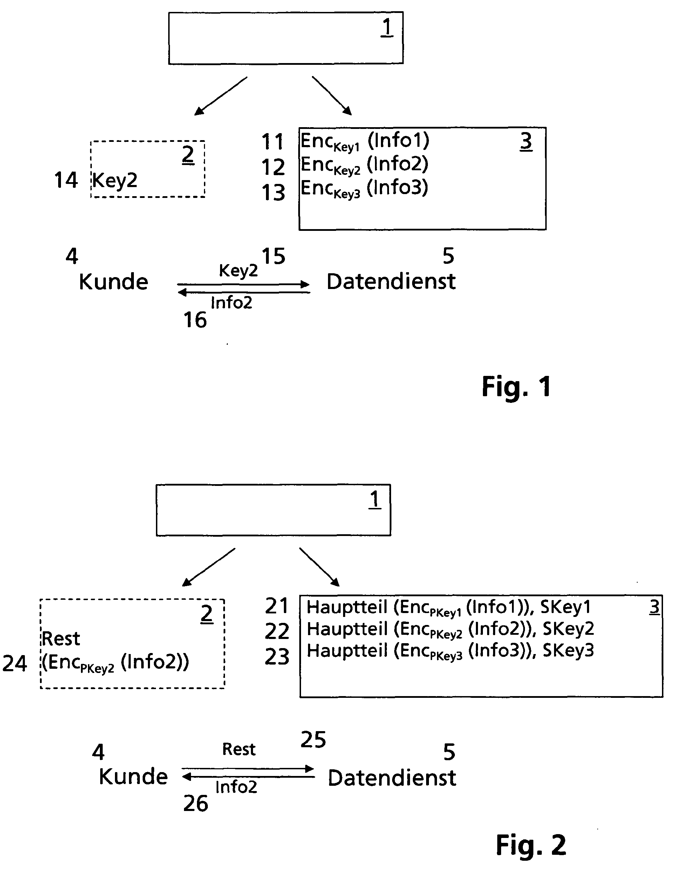

In Fig.1 ist schematisch ein Produktinformationssystem mit einem Hersteller 1, einem Produkt 2 sowie einer Datenbank 3 eines Datendiensts 5 dargestellt. Der Hersteller 1 produziert sein Produkt 2.

Der Hersteller bringt in maschinenlesbarer Form, beispielsweise durch Speicherung der Information in ein RFID-Label, einen Entschlüsselungsdatensatz 14 auf dem Produkt an. Für das Produkt 2 erzeugt der Hersteller aus vertraulichen Daten eine verschlüsselte Produktinformation 12. Die verschlüsselte Produktinformation 12 kann durch Verschlüsseln der vertraulichen Daten mit dem Schlüssel 14 erfolgen. Den verschlüsselten Datensatz übergibt der Hersteller 1 einem Datenbankanbieter der Datenbank 3 vorzugsweise als einen von einer Vielzahl von verschlüsselten Datensätzen 11 bis 13. Die Datensätze 11 bis 13 der Datenbank 3 sind individuell verschlüsselt. Dass heißt mit einem Entschlüsselungsdatensatz 14 kann vorzugsweise nur ein vertraulicher Datensatz 16 erzeugt werden, maximal jedoch eine im Verhältnis zur Gesamtmenge der Daten in der Datenbank sehr geringe Anzahl von Datensätzen entschlüsselt werden.

Ein Kunde 4 liest, beispielsweise mit Hilfe seines mobilen Endgerätes, die Inhalte des RFID-Labels des Produkts 2 und somit den Entschlüsselungsdatensatz 14 aus und sendet ihn als Datenanforderung 15 an einen Datendienst 5. Der Datendienst 5 verwendet den in der Datenanforderung enthaltenen Entschlüsselungsdatensatz 14, um aus dem verschlüsselten Datensatz 12 die vertraulichen Daten 16 zu gewinnen. Die entschlüsselten vertraulichen Daten 16 sendet der Datendienst 5 dem Kunden 4, beispielsweise über Mobilfunknetze auf dessen Mobilfunkgerät.

Es ist anzumerken, daß die Schritte des Schreibens der maschinenlesbaren Information auf das Produkt und des Erzeugens der verschlüsselten vertraulichen Daten selektiv von einer oder von zwei verschiedenen vertrauenswürdigen Instanzen ausgeführt werden kann. Beispielsweise kann ein RFID-Label-Hersteller das Schreiben der Information auf das Produkt vornehmen, nachdem ein Sicherheitsdienstleister oder der Hersteller die vertraulichen Daten verschlüsselt hat und die entsprechenden Entschlüsselungsdatensätze 14 bereitstellt.

Fig. 2 zeigt eine hinsichtlich der Aufteilung der gespeicherten Informationen modifizierte Variante des Systems aus Fig.1.

In dem Produktinformationssystem erzeugt der Hersteller 1 oder eine vertrauenswürdige weitere Instanz einen verschlüsselten Datensatz Enc_PKey2(Info2) für die vertraulichen Daten Info2. Enc_PKey2 (Info2) steht hierbei für die mit dem öffentlichen Schlüssel PKey2 des asymmetrischen Schlüsselpaares (PKey2, SKey2) verschlüsselten Daten Info2. Der verschlüsselte Datensatz wird aufgeteilt in zwei Teile einen Hauptdatensatz 22 (Main-Part) und einen Restdatensatz 24 (Remainder). Der Hauptdatensatz 22, der optional auch den Entschlüsselungsschlüssel Skey1 bis Skey3, hier also der geheime Schlüssel des asymmetrischen Schlüsselpaares, enthalten kann, wird zusammen mit weiteren gleichartigen Datensätzen 21 bis 23 für weitere Produkte in der Datenbank 3 gespeichert. Der Restdatensatz 24 wird in dem RFID-Label des Produkts 2 gespeichert. Entsprechend liest der Kunde 4 aus dem Produkt 2 den Restdatensatz 24 aus und sendet ihn als Datenanforderung 25 an den Datendienst 5. Erst mit Hilfe des zusammengesetzten Datensatzes kann für das Produkt 2 die vertrauliche Information wieder entschlüsselt werden. Die entschlüsselte vertrauliche Information wird dem Kunden als Antwort 26 übermittelt.

In den beschriebenen Systemen ist der Kunde 4 nicht notwendigerweise ein Endkunde des Produkts 2, sondern kann ein Zwischenhändler, eine Zollbehörde oder ein Verkäufer sein.

Um zu verhindern, daß in dem System gemäß Fig. 2 in der Datenbank mit Hilfe des Hauptdatensatzes (MainPart(EncPkey2(Info2)) und des Entschlüsselungsschlüssels (SKey2) entschlüsselte Daten, für den vorhandenen Teil, erzeugt werden können, sind verschiedene Ansätze denkbar. Der verwendete Verschlüsselungsalgorithmus kann dabei beispielsweise auch ein symmetrischer Algorithmus, wie ein 3-DES-Algorithmus, sein.

Gemäß einer ersten Variante kann der Restdatensatz 24 aus jeweils einem ersten Teil der sequentiell nacheinander verschlüsselten Teile des gesamten Datensatzes bestehen. Somit ist jeder einzelne der Verschlüsselungsblöcke aufgeteilt und kann nicht entschlüsselt werden.

In einer weiteren Variante kann man eine Permutation des verschlüsselten Datensatzes derart vornehmen, daß nach Ausführung der Permutation der erste Block jeweils aus den ersten Bytes der ersten acht Blöcke besteht. Wird als Restdatensatz nun der erste Block mit den entsprechenden Teilen der anderen Blöcke als Restdatensatz verwendet, sind die einzelnen Datenblöcke wiederum nicht entschlüsselbar.

Eine weitere Variante besteht darin, den CBC-Modus des DES- oder 3-DES-Algorithmus dahin zu verändern, daß für die Entschlüsselung des Blocks N der Klartext des Blockes N-1 vorliegen muß. Mit dem Fehlen des ersten Blockes des verschlüsselten Datensatzes ist damit jeder weitere Block nicht mehr zu entschlüsseln. Eine solche Verkettung könnte man z.B. dadurch erreichen, daß das Ergebnis der Verschlüsselung von Block N noch mit dem Klartext des Blockes N-1 verknüpft wird, beispielsweise mit einer XOR-Verknüpfung. Damit kann der entstandene endgültige Block des Verschlüsselungsdatensatzes nur entschlüsselt werden, wenn man vorher den Block N-1 des Klartextes besitzt. Mit Entfernen des ersten Blocks des verschlüsselten Datensatzes als Restdatensatz kann aber der erste Block des Klartext nicht generiert werden und damit der Rest der Blöcke des verschlüsselten Datensatzes ebenfalls nicht entschlüsselt werden.

## Patentansprüche

1. Verfahren in einem System mit Produkten (2), auf welchen maschinenlesbare Informationen (14,24) aufgebracht sind, und mit einem Datendienst (5) für Daten (16,26), die den Produkten zugeordnet sind, mit den folgenden Schritten:
- Lesen der auf einem Produkt (2) aufgebrachten maschinenlesbaren Information (14,24) durch einen Datenanforderer (4);
- Anfordern von dem Produkt zugeordneten Daten durch Senden der gelesenen maschinenlesbaren Daten an den Datendienst (5);
- Empfangen der Datenanforderung (15, 25) durch den Datendienst (5);
- Bestimmen der angeforderten Daten (16,26) durch den Datendienst (5) und
- Senden der angeforderten Daten (16,26) von dem Datendienst (5) an den Datenanforderer (4);
**dadurch gekennzeichnet, dass**
das System ein Produktinformationssystem ist, in welchem der Datendienst (5) die dem Produkt zugeordneten Daten in verschlüsselter Form speichert; dem Datendienst für eine Vielzahl von Produkten zugeordnete Daten in verschlüsselter Form vorliegen, die der Datendienst ohne die Inhalte einer Datenanforderung jedoch nicht entschlüsseln kann;
in dem Schritt des Bestimmens die angeforderten Daten (16,26) erzeugt werden durch Entschlüsseln der gespeicherten, verschlüsselten Daten (11-13, 21-23) unter Verwendung der mit der Datenanforderung erhaltenen maschinenlesbaren Informationen (14,24); und
in dem Schritt des Sendens die entschlüsselten Daten als die angeforderten Daten (16,26) gesendet werden.

2. Verfahren nach Anspruch 1 **dadurch gekennzeichnet, dass** die maschinenlesbare Information Entschlüsselungsdaten enthalten, welche als Schlüssel für die Entschlüsselung verwendet werden.

3. Verfahren nach Anspruch 1 **dadurch gekennzeichnet, dass** die dem Produkt (2) zugeordneten Daten in verschlüsselter Form aufgeteilt sind in einen Hauptteil der verschlüsselten Information, welche der Datendienst (5) bereit hält, und in einen Rest der verschlüsselten Information, welcher als die maschinenlesbare Information auf dem Produkt aufgebracht ist.

4. Verfahren nach einem der vorhergehenden Ansprüche **dadurch gekennzeichnet, dass** die maschinenlesbare Information eine Produkt-ID enthält.

5. Verfahren nach einem der vorhergehenden Ansprüche **dadurch gekennzeichnet, dass** der Datendienst in dem Schritt des Bestimmens die zu entschlüsselnden Daten mit Hilfe der Produkt-ID bestimmt.

6. Verfahren nach Anspruch 4 oder 5 **dadurch gekennzeichnet, dass** die Produkt-ID durch einen gemeinsamen Teil der verschlüsselten produktbezogenen Daten gebildet wird, der sowohl als maschinenlesbare Information auf dem Produkt als auch bei dem Datendienst vorliegen.

7. Datendienstvorrichtung zur Bereitstellung von Daten, die Produkten zugeordnet sind, in Antwort auf Datenanfragen, mit:
einer Datenbank, in welcher für eine Vielzahl von Produkten produktbezogene Daten in verschlüsselter Form vorliegen, welche die Datendienstvorrichtung ohne die Inhalte einer Datenanforderung jedoch nicht entschlüsseln kann; und
einer Verarbeitungseinheit, welche eingerichtet ist Datenanfragen zu empfangen und zu beantworten, wobei die Verarbeitungseinheit eingerichtet ist die angeforderten Daten (16,26) durch Entschlüsseln von verschlüsselten Daten (12, 22) aus der Datenbank unter Verwendung von mit der Datenanforderung enthaltenen maschinenlesbaren Informationen (14,24) zu erzeugen.

8. Produkt mit maschinenlesbaren Informationen, welche vorgesehen sind um, von einer zentralen Datendienstvorrichtung eines Produktinformationssystems nach Anspruch 7 verwendet zu werden zur Erzeugung von auf das Produkt bezogenen Daten (16,26) durch Entschlüsseln von verschlüsselten Daten (12, 22).

9. Produktinformationssystem umfassend eine Datendienstvorrichtung gemäß Anspruch 7 und eine Vielzahl von Produkten gemäß Anspruch 8.

10. Produktinformationssystem nach Anspruch 9 **dadurch gekennzeichnet, dass** die Produkte und die Datendienstvorrichtung angepasst sind zur Durchführung eines Verfahrens nach Anspruch 1 bis 6.

11. Produktinformationssystem nach Anspruch 9 oder 10 **gekennzeichnet durch**, einen Produkthersteller, der die Produkte herstellt und die dem Produkt zugeordneten Daten in verschlüsselter Form dem Anbieter der Datendienstvorrichtung bereitstellt.

## Claims

1. A method in a system with products (2) on which machine-readable information items (14, 24) are applied, and with a data service (5) for data (16, 26) allocated to the products, with the following steps of:
- reading the machine-readable information (14, 24) applied to a product (2) by a data requester (4);
- requesting of data allocated to the product by sending the read machine-readable data to the data service (5);
- receiving the data request (15, 25) by the data service (5);
- determining the requested data (16, 26) by the data service (5) and
- sending the requested data (16, 26) by the data service (5) to the data requester (4);
**characterized in that**
the system is a product information system, in which the data service (5) stores the data allocated to the product in encrypted form;
data allocated to a multiplicity of products are available in encrypted form to the data service, however which data cannot be decrypted by the data service without the contents of a data request;
in the step of determining, the requested data (16, 26) are generated by decrypting the stored, encrypted data (11-13, 21-23) using the machine-readable information items (14, 24) received with the data request; and
in the step of sending, the decrypted data are sent as the requested data (16, 26).

2. The method according to claim 1, **characterized in that** the machine-readable information contains decryption data which are used as key for the decryption.

3. The method according to claim 1, **characterized in that** the data allocated to the product (2) are divided in encrypted form into a main part of the encrypted information, which is held ready by the data service (5), and into a rest of the encrypted information, which is applied to the product as the machine-readable information.

4. The method according to any of the preceding claims, **characterized in that** the machine-readable information contains a product ID.

5. The method according to any of the preceding claims, **characterized in that** in the step of determining, the data service determines the data to be decrypted with the aid of the product ID.

6. The method according to claim 4 or 5, **characterized in that** the product ID is formed by a common part of the encrypted product-related data, which is available both in the form of machine-readable information on the product and to the data service.

7. A data service device for providing data allocated to products in response to data requests, with:
a database in which product-related data for a multiplicity of products are present in encrypted form, however which data cannot be decrypted by the data service device without the contents of a data request; and
a processing unit configured to receive and respond to data requests, wherein the processing unit is configured to generate the requested data (16, 26) by decrypting encrypted data (12, 22) from the database utilizing machine-readable information items (14, 24) contained with the data request.

8. A product with machine-readable information items which are supplied for utilization by a central data service device of a product information system according to claim 7 for generating data (16, 26) related to the product by decrypting encrypted data (12,22).

9. A product information system comprising a data service device according to claim 7 and a multiplicity of products according to claim 8.

10. The product information system according to claim 9, **characterized in that** the products and the data service device are adapted to perform a method according to claim 1 to 6.

11. The product information system according to claim 9 or 10, **characterized by** a product manufacturer who manufactures the products and supplies the data allocated to the product in encrypted form to the provider of the data service device.

## Revendications

1. Procédé dans un système doté de produits (2) sur lesquels des informations (14,24) lisibles par machine sont placées et d'un service de données (5) destiné à des données (16,26) qui sont affectées aux produits, comprenant les étapes suivantes :
lecture, par un demandeur de données (4), des informations (14,24) lisibles par machine placées sur un produit (2);
demande, par envoi des données lisibles par machine lues au service de données (5), de données affectées aux produits;
réception de la demande de données (15,25) par le service de données (5);
détermination, par le service de données (5), des données demandées (16,26), et
envoi des données demandées (16,26) du service de données (5) au demandeur de données (4);
**caractérisé en ce que**
le système est un système d'informations produits dans lequel le service de données (5) mémorise sous forme cryptée les données affectées au produit;
le service de données dispose sous forme cryptée, pour une pluralité de produits, de données affectées que le service de données ne peut toutefois pas décrypter sans les contenus d'une demande de données;
lors de l'étape de la détermination, les données demandées (16,26) sont générées par décryptage des données (11-13, 21-23) cryptées mémorisées en utilisant les informations (14,24) lisibles par machine reçues avec la demande de données; et
lors de l'étape de l'envoi, les données décryptées sont envoyées en tant que les données demandées (16,26).

2. Procédé selon la revendication 1, **caractérisé en ce que** les informations lisibles par machine contiennent des données de décryptage qui sont utilisées en tant que clé pour le décryptage.

3. Procédé selon la revendication 1, **caractérisé en ce que** les données affectées au produit (2) sont réparties sous forme cryptée dans une partie principale de l'information cryptée que le service de données (5) garde à disposition et dans un reste de l'information cryptée qui est placé sur le produit en tant que l'information lisible par machine.

4. Procédé selon une des revendications précédentes, **caractérisé en ce que** l'information lisible par machine contient un ID de produit.

5. Procédé selon une des revendications précédentes, **caractérisé en ce que,** lors de l'étape de la détermination, le service de données détermine à l'aide de l'ID de produit les données à décrypter.

6. Procédé selon la revendication 4 ou 5, **caractérisé en ce que** l'ID de produit est constitué par une partie commune des données cryptées liées au produit qui se trouvent tant sur le produit en tant qu'information lisible par machine qu'au service de données.

7. Dispositif de service de données destiné à la mise à disposition de données affectées à des produits, en réponse à des demande de données, comprenant:
une banque de données dans laquelle, pour une pluralité de produits, des données liées à des produits se trouvent sous forme cryptée, le dispositif de service de données ne pouvant toutefois pas décrypter ces dernières sans les contenus d'une demande de données; et
une unité de traitement configurée pour recevoir des demandes de données et pour y répondre,
l'unité de traitement étant configurée pour générer les données demandées (16,26) par décryptage de données (12,22) cryptées provenant de la banque de données en utilisant des informations (14,24) lisibles par machine contenues avec la demande de données.

8. Produit doté d'informations lisibles par machine prévues pour être utilisées par un dispositif central de service de données d'un système d'informations produits selon la revendication 7 pour la génération de données (16,26) liées au produit par décryptage de données cryptées (12,22).

9. Système d'informations produits comprenant un dispositif de service de données selon la revendication 7 et une pluralité de produits selon la revendications 8.

10. Système d'informations produits selon la revendication 9, **caractérisé en ce que** les produits et le dispositif de service de données sont adaptés à l'exécution d'un procédé selon les revendications de 1 à 6.

11. Système d'informations produits selon la revendication 9 ou 10 **caractérisé par** un fabricant de produits qui fabrique les produits et met, sous forme cryptée, les données liées au produit à la disposition du fournisseur du dispositif de service de données.
